Europäisches Patentamt

European Patent Office

Office européen des brevets

(19)

(11) Publication number: **0 247 384 B1**

(12) **EUROPEAN PATENT SPECIFICATION**

(45) Date of publication of patent specification: **20.02.91**  (51) Int. Cl.⁵: **B01J 8/06, C01B 3/32**

(21) Application number: **87106324.4**

(22) Date of filing: **30.04.87**

(54) Reformer.

(30) Priority: **02.05.86 JP 100948/86**

(43) Date of publication of application:
**02.12.87 Bulletin 87/49**

(45) Publication of the grant of the patent:
**20.02.91 Bulletin 91/08**

(84) Designated Contracting States:
**DE FR GB**

(56) References cited:
**EP-A- 0 206 608**
**DE-A- 1 901 758**
**US-A- 3 541 729**
**US-A- 4 098 589**

**PATENT ABSTRACTS OF JAPAN, vol. 7, no.
248 (C-193)[1393], 4th November 1983; & JP-
A-58 135 104 (NISSAN JIDOSHA K.K.)
11-08-1983**

(73) Proprietor: **HITACHI, LTD.**
**6, Kanda Surugadai 4-chome**
**Chiyoda-ku, Tokyo 101(JP)**

(72) Inventor: **Amano, Yoshiaki**
**Tsukuba House 13-404 2625-3,**
**Shimoinayoshi**
**Chiyoda-mura, Niihari-gun, Ibaraki-ken(JP)**
Inventor: **Obata, Isao**
**Koumei-ryo 3745-2, Shimoinayoshi Chiyoda-
mura**
**Niihari-gun Ibaraki-ken(JP)**
Inventor: **Hanzawa, Asao**
**4218-7Shimogou Iwama-machi**
**Nishiibaraki-gun, Ibaraki-ken(JP)**

(74) Representative: **Finck, Dieter et al**
**Patentanwälte v. Füner, Ebbinghaus, Finck**
**Mariahilfplatz 2 & 3**
**D-8000 München 90(DE)**

## Description

The present invention relates to a reformer which produces hydrogen through the steam reforming of alcohols etc. More particularly, it is well suited for application to a reformer for an on-site type pure hydrogen production unit or for a fuel cell.

As disclosed in U. S. Patent 4,098,589 by way of example, a prior-art reformer is so constructed that a reformer tube formed of a double tube is filled up with a reforming catalyst and that heat necessary for a reaction is supplied from the closed end of the reformer tube with a burner.

There is also a reformer wherein a reformer tube of single tube is filled up with a reforming catalyst and is directly heated from the surroundings of the reformer tube with a burner or the like.

Further, in a case where a reaction gas is any of alcohols, such as methanol, the reaction temperature is as low as about 250 - 300 °C, and the heat-resisting point of a reforming catalyst is low, so that a heating medium oil is often used for heating.

In the case of heating the reformer tube with the burner, the reformer tube is directly exposed to flames, and the reformer tube and the catalyst are heated above the heat-resisting points thereof to incur the damage of the reformer tube, the lowering of the activity of the catalyst, etc. in some cases. Nevertheless, measures for preventing these drawbacks are not considered.

In the case of a low reaction temperature, to the end of preventing such drawbacks, it has been devised to indirectly heat the reformer tube by the use of the heating medium oil or the like. In this case, however, a separate heating furnace for heating the heating medium oil or the like needs to be disposed. Accordingly, the whole apparatus becomes large in size.

Besides, in case of a reformer for any of alcohols, the alcohol needs to be vaporized before a gas is introduced into the layer of a reforming catalyst. Therefore, a vaporizer needs to be disposed before the reformer, and the whole apparatus becomes complicated.

In the prior-art reformer described above wherein the reformer tube is directly heated by the burner, when the feed rate of a raw material decreases due to a load change or the state of the flames changes abnormally, the temperature of the reformer tube and that of the reforming catalyst can exceed the heat-resisting points thereof, resulting in such a problem that the damage of the reformer tube and the lowering of the activity of the catalyst are incurred.

When the reaction temperature is low, the heating medium oil or the like is employed for solving the above problem. In this case, however, the heating furnace for heating the heating medium oil or the like needs to be disposed separately from the reformer, and the size of the whole apparatus becomes larger to that extent. Accordingly, this measure is unsuitable for an apparatus required to be small in size, such as an on-site type apparatus. Moreover, the enlarged size increases the heat loss and lowers the thermal efficiency.

In the case of the reformer for any of alcohols, the alcohol needs to be introduced into the catalyst after being vaporized in advance. Therefore, the vaporizer needs to be separately disposed, and the apparatus becomes large in size.

An object of the present invention is to provide a reformer which can prevent the abnormal temperature rises of reformer tubes and a combustion catalyst layer and which can make the whole apparatus compact.

The present invention for accomplishing the objects consists in a reformer comprising reformer tubes each of which has a reaction portion filled up with a reforming catalyst for reforming a raw material, a vaporization portion which serves to vaporize the raw material and which is formed under said reaction portion within said each reformer tube, a heating source which heats the vaporization portions and the reaction portions outside them, means for feeding said vaporization portions with the raw material in a liquid state, and delivery means for externally supplying a gas reformed by passing through said reaction portions.

Conveniently, said reaction portion filled up with the reforming catalyst is provided at an upper part within said reformer tube, and said vaporization portion for the raw material is formed under said reaction portion within said reformer tube.

Preferably, each reformer tube has a double pipe structure, in which said vaporization portion is formed at a lower end part of said reformer tube, and the raw material is fed to said vaporization portion by passing inside an inner pipe of the double tube.

Advantageously, said reaction portion filled up with the catalyst is provided between an outer pipe and the inner pipe of said reformer tube, said vaporization portion is provided under said reaction portion, and a layer of a packing material is provided at an upper part within said vaporization portion.

The raw material may be any of alcohols. The reforming catalyst may consist of a mixture of copper-zinc system which is carried on an alumina carrier. The material packed in the upper part of said vaporization portion may consist of alumina balls or ceramic balls.

It is preferred that the reformer tubes are arranged in a shell, a space between said shell and said reformer tubes is filled up with a heat transfer packing material, and the heater portion is disposed under said reformer tubes within said shell, fuel being burnt in said heater portion to produce a combustion gas, whereby said vaporization portions at the lower parts of said reformer tubes and said reaction portions at the upper parts of said reformer tubes are heated from outside said reformer tubes by the combustion gas.

Preferably, said heater portion includes a combustion catalyst layer which burns fuel and air owing to catalyst combustion.

According to the present invention, the raw material can be accumulated under the liquid state in the vaporization portion. Therefore, even when the raw material is excessively heated from outside the reformer tube, the temperature of this raw material does not exceed the vaporization point thereof. Accordingly, the temperature of the reformer tube accumulating the raw material does not rise considerably, either, and it can be prevented from exceeding the heat-resisting point thereof. Moreover, a heating fluid such as the combustion gas outside the reformer tube is deprived of heat by the vaporization portion, and the temperature of the combustion gas lowers, so that the excess heating of the reforming catalyst layer can be prevented. Furthermore, the vaporization portion is defined under the reaction portion and is directly heated by the heating source, so that the vaporizer, the heating medium furnace, etc. as in the prior arts need not be separately disposed, and the whole apparatus is made compact.

As described above, according to the present invention, a liquid raw material (for example, any of alcohols, or a mixture consisting of the alcohol and water) can be accumulated in a vaporization portion provided under a reaction portion, and the vaporization portion and the reaction portion can be continuously arranged. Thus, there is the effect that the abnormal temperature rises of a reformer tube and a reforming catalyst layer can be prevented, so the damage of the reformer tube is preventable, and also the degradation of the catalyst of the reaction portion is preventable.

Besides, the vaporization portion is provided under the reaction portion so as to be directly heated by a heating source. Thus, there is the effect that a vaporizer, a heating medium furnace, etc. need not be separately disposed, so the whole apparatus can be made compact.

Other features, objects and advantages of the present invention will become apparent from the following description taken with reference to the accompanying drawings.

Fig. 1    is a vertical sectional view showing an embodiment of the reformer;

Fig. 2    is a graph showing the temperature distributions of a combustion gas and a reaction gas (reformed gas) which are taken along a reformer tube in the reformer shown in Fig. 1.

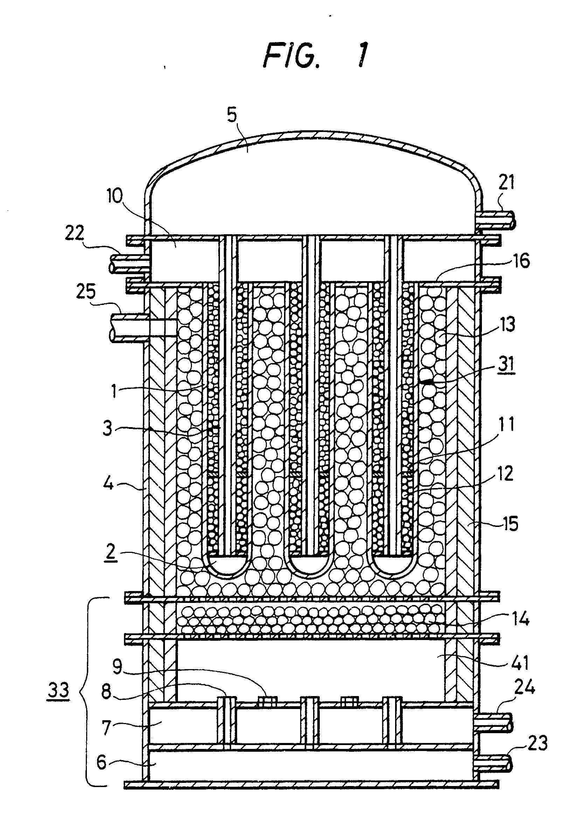

As shown in Fig.1, a plurality of reformer tubes 1 are fixed to a tube plate 16. The lower ends of the reformer tubes 1 are closed, and the lower end parts thereof form vaporization portions 2 for vaporizing a raw material, which confront a heater portion (heating source) 33. Numeral 4 designates a shell disposed so as to surround the reformer tubes 1, and a raw material header 5 is provided in the upper part of the shell. Herefrom, raw material injection pipes 3 are extended through the central parts of the respective reformer tubes 1 so as to communicate with the vaporization portions 2. The raw material (a mixture consisting of methanol and water) is fed under pressure to the vaporization portions 2 by the injection pipes 3. In the vaporization portions 2, the raw material is heated from below and then vaporized by the heater portion (heating source) 33. The part of the reformer tube 1 over the vaporization portion 2 is filled up with a packing material 12 such as alumina balls or ceramic balls in order to promote the vaporization. The gas of the vaporized raw material is introduced into a reaction portion 31 which is filled up with a reforming catalyst 11. A catalyst of copper-zinc system carried on alumina, for example, is used as the reforming catalyst 11. In the reaction portion 31, the raw material gas gives rise to a steam reforming reaction indicated below:

$$CH_3OH + H_2O \rightarrow CO_2 + 3H_2$$

In this manner, the raw material gas is turned into a hydrogen-rich gas (reformed gas). The reformed gas having come out of the reaction portions 31 is collected into a reformed gas header 10, and is sent out herefrom by a delivery pipe 22.

The heater portion 33 is constructed as stated below. Fuel is supplied from a supply pipe 23 into a fuel header 6, and is jetted herefrom into a mixing chamber 41 by fuel nozzles 8. On the other hand, air is supplied from a supply pipe 24 into a header 7 and is jetted herefrom into the mixing chamber 41 by nozzles 9. After the fuel and the air have been mixed in the mixing chamber 41, the mixture gas is led to a combustion catalyst layer 14 and is burnt by catalyst combustion. The resulting combustion gas flows upwards along the reformer tubes 1 and affords heat to the vaporization portions 2 as well as the reaction portions 31, whereupon it is emitted out of the reformer by a discharge pipe 25. That space around the reformer tubes 1 through with the combustion gas flows is filled up with a heat transfer packing material 13 such as alumina balls or ceramic balls, thereby to enhance the effect of heat transfer.

The reformer tubes 1 and the raw material injection pipes 3 may be fabricated of a material such as stainless steel or Inconel. Besides, in the figure, numeral 21 indicates a feed pipe which feeds the raw material header 5 with the liquid methanol being the raw material, numeral 16 the tube plate which fixes the upper parts of the reformer tubes 1 and which forms the reformed gas header 10, and numeral 15 a heat insulator.

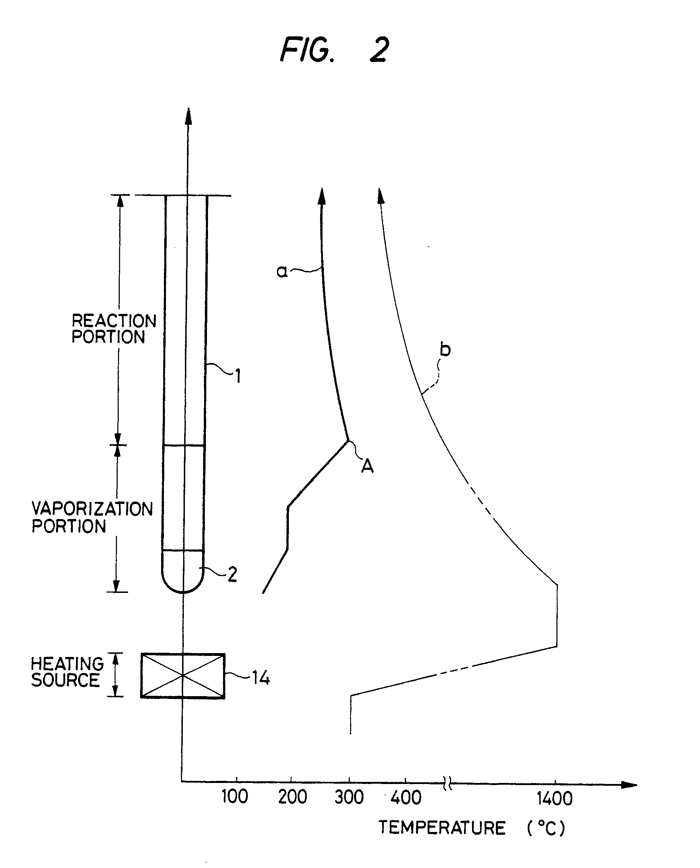

Fig. 2 illustrates the circumstances of the temperature variations of the reaction gas (reformed gas) and the combustion gas within the reformer in the foregoing embodiment. In the figure, the axis of abscissas represents the temperature, while the axis of ordinates represents the position of the reformer in the vertical direction thereof. That is, numeral 14 on the axis of ordinates indicates the position of the combustion catalyst layer constituting the heating source, and numeral 1 indicates the position of the reformer tube. Besides, a curve a in the graph indicates the variation of the temperature of the reaction gas rising in the reformer tube 1, while a curve b indicates the variation of the temperature of the combustion gas rising in the reformer. As understood from the figure, since the vaporization portion 2 at the fore end of the reformer tube is filled up with the raw material under the liquid state, the lower end part of the vaporization portion 2 of the reformer tube 1 is held at a comparatively low temperature in spite of the high temperature of the combustion gas. This is convenient in consideration of the heat resisting property of that lowermost end part of the reformer tube which is exposed to the combustion gas at the high temperature. In this manner, the present invention produces the effect that, owing to the liquid raw material, the reformer tubes are protected from any damage attributed to excess heating.

Next, before the raw material vaporized and superheated in the vaporization portion enters the reaction portion, it becomes the highest temperature (a point A in the graph). At this time, the combustion gas exhibits a lower temperature because it affords heat to the vaporization portion. Accordingly, the present invention is well suited for heating the reaction portion which contains a catalyst having a heat-resisting point of about 350 -400 °C, such as the reforming catalyst for methanol, and the activity of the catalyst can be prevented from lowering.

Moreover, in the present invention, the vaporization portion and the reaction portion are continuously arranged within the reformer tube 1. This brings forth the effect that the vaporization portion and the reaction portion disposed separately from each other in the prior art can be intergrated to reduce the size of the whole apparatus. Also, the heat loss can be diminished.

As the fuel which is supplied to the heater portion 33, there is used exhaust gas from a pressure swing adsorption (PSA) device in a hydrogen production unit, auxiliary fuel externally supplied, or the like.

## Claims

1. A reformer comprising reformer tubes (1) each of which has a reaction portion (31) filled up with a reforming catalyst (11) for reforming a raw material, a vaporization portion (2) which serves to vaporize the raw material and which is formed under said reaction portion (31) within said each reformer tube (1), a heating source (33) which serves to heat the vaporization portions (2) and the reaction portions (31) from outside said reformer tubes (1), means (21, 5, 3) for feeding said vaporization portions (2) with the raw material in a liquid state, and delivery means (10, 22) for externally supplying a gas reformed by passing through said reaction portions (31).

2. A reformer according to claim 1, wherein said reaction portion (31), filled up with the reforming catalyst (11), is provided at an upper part within said reformer tube (1), and said vaporization portion (2) for the raw material is formed under said reaction portion (31) within said reformer tube (1).

3. A reformer according to claim 1 or 2, wherein said each reformer tube (1) has a double pipe structure, in which said vaporization portion (2) is formed at a lower end part of said reformer tube (1), and the raw material is fed to said vaporization portion (2) by passing inside an inner pipe (3) of the double tube.

4. A reformer according to claim 3, wherein said reaction portion (31) filled up with the catalyst (11) is provided between an outer pipe and the inner pipe (3) of said reformer tube (1), said vaporization portion (2) is provided under said reaction portion (31), and a layer of a packing material (12) is provided at an upper part within said vaporization portion (2).

5. A reformer according to one of the claims 1 to 4, wherein the raw material is any of alcohols.

6. A reformer according to claim 5, wherein the reforming catalyst (11) is a mixture of copper-zinc system which is carried on an alumina carrier.

7. A reformer according to one of the claims 4 to 6, wherein the material (12) packed in the upper part of said vaporization portion (2) is alumina balls or ceramic balls.

8. A reformer according to one of the claims 1 to 7, wherein said reformer tubes (1) are arranged in a shell (4), a space between said shell (4) and said reformer tubes (1) is filled up with a heat transfer packing material (13), and the heater portion (33) is disposed under said reformer tubes (1) within said shell (4), fuel being burnt in said heater portion (33) to produce a combustion gas, whereby said vaporization portions (2) at the lower parts of said reformer tubes (1) and said reaction portions (31) at the upper parts of said reformer tubes (1) are heated from outside said reformer tubes (1) by the combustion gas.

9. A reformer according to claim 8, wherein said heater portion (33) includes a combustion catalyst layer (14) which burns fuel and air owing to catalyst combustion.


**Revendications**

1. Reformeur comprenant des tubes (1) dont chacun possède une partie de réaction (31) remplie par un catalyseur de reformage (11) pour le reformage d'une matière première, une partie de vaporisation (2), qui sert à vaporiser la matière première et est formée au-dessous de ladite partie de réaction (31) à l'intérieur de chacun desdits tubes (1) du reformeur, une source de chauffage (33) servant à chauffer les parties de vaporisation (2) et les parties de réaction (31) à partir de l'extérieur desdits tubes (1) du reformeur, des moyens (21,5,3) servant à envoyer la matière première à l'état liquide auxdites parties de vaporisation (2), et des moyens de délivrance (10,22) servant à envoyer à l'extérieur un gaz reformé moyennant son passage dans lesdites parties de réaction (31).

2. Reformeur selon la revendication 1, dans lequel ladite partie de réaction (31), remplie par le catalyseur de reformage (11), est prévue dans une zone supérieure à l'intérieur dudit tube (1) du reformeur, et ladite partie de vaporisation (2) pour la matière première est formée audessus de ladite partie de réaction (31) à l'intérieur dudit tube (1) du reformeur.

3. Reformeur selon la revendication 1 ou 2, dans lequel chacun desdits tubes (1) du reformeur possède une structure à double canalisation, dans laquelle ladite partie de vaporisation (2) est formée dans une zone d'extrémité inférieure dudit tube (1) du reformeur, et ladite matière première est envoyée à ladite partie de vaporisation (2) moyennant son transfert à l'intérieur de la canalisation intérieure (3) faisant partie de la canalisation double.

4. Reformeur selon la revendication 3, dans lequel ladite partie de réaction (31) remplie par le catalyseur (11) est prévue entre une canalisation intérieure et la canalisation intérieure (3) dudit tube (1) du reformeur, ladite partie de vaporisation (2) est prévue au-dessous de ladite partie de réaction (31), et une couche d'un matériau de remplissage (12) est prévue dans une zone supérieure à l'intérieur de ladite partie de vaporisation (2).

5. Reformeur selon l'une des revendications 1 à 4, dans lequel la matière première est un alcool.

6. Reformeur selon la revendication 5, dans lequel le catalyseur de reformage (11) est un mélange d'un système cuivre-zinc, qui est porté par un support en alumine.

7. Reformeur selon l'une des revendications 4 à 6, dans lequel le matériau (12) chargé dans la zone supérieure de ladite partie de vaporisation (2) est constitué par des billes d'alumine ou des billes céramiques.

8. Reformeur selon l'une des revendications 1 à 7, dans lequel lesdits tubes (1) du reformeur sont disposés dans une coque (4), un espace entre ladite coque (4) et lesdits tubes (1) du reformeur est rempli par au moins un matériau de remplissage (13) établissant un transfert thermique, et la partie (33) formant dispositif de chauffage est disposée au-dessous desdits tubes (1) du reformeur à l'intérieur de ladite coque (4) du combustible étant brûlé dans ladite partie (33) formant dispositif de chauffage de manière à produire un gaz de combustion, grâce à quoi lesdites parties de vaporisation (2) situées dans les parties inférieures desdits tubes (1) du reformeur et lesdites parties de réaction (31) situées dans les parties supérieures desdits tubes (1) du reformeur sont chauffées à partir de l'extérieur de ces tubes, par le gaz de combustion.

9. Reformeur selon la revendication 8, dans lequel chaque partie (33) formant dispositif de chauffage comprend une couche (14) de catalyseur de combustion qui brûle du combustible et de l'air grâce à une combustion catalytique.

**Ansprüche**

1. Reformiervorrichtung mit Reformierrohren (1) von denen jedes einen Reaktionsabschnitt (31), der mit einem Reformierkatalysator (11) zum Reformieren eines Rohmaterials gefüllt ist, einen Verdampfungsabschnitt (2), der zum Verdampfen des Rohmaterials dient und der unter dem Reaktionsabschnitt (31) in jedem Reformierrohr (1) ausgebildet ist, eine Wärmequelle (33), die zum Erwärmen der Verdampfungsabschnitte (2) und der Reaktionsabschnitte (31) von außerhalb der Reformierrohre (1) dient, Einrichtungen (21, 5, 3) zum Beschikken der Verdampfungsabschnitte (2) mit dem Rohmaterial in einem flüssigen Zustand und Fördereinrichtungen (10, 22) zum externen Zuführen eines Gases aufweist, das durch Hindurchführen durch die Reaktionsabschnitte (31) reformiert ist.

2. Reformiervorrichtung nach Anspruch 1, bei welcher der Reaktionsabschnitt (31), welcher mit dem Reformierkatalysator (11) gefüllt ist, an einem oberen Teil in dem Reformierrohr (1) vorgesehen ist, und der Verdampfungsabschnitt (2) für das Rohmaterial unter dem Reaktionsabschnitt (31) in dem Reformierrohr (1) ausgebildet ist.

3. Reformiervorrichtung nach Anspruch 1 oder 2, bei welcher Jedes Reformierrohr (1) einen Doppelrohraufbau hat, bei welchem der Verdampfungsabschnitt (2) an einem unteren Endteil des Reformierrohrs (1) ausgebildet ist, und das Rohmaterial dem Verdampfungsabschnitt (2) durch Führen innerhalb eines Innenrohres (3) des Doppelrohres zugeführt wird.

4. Reformiervorrichtung nach Anspruch 3, bei welcher der Reaktionsabschnitt (31), der mit dem Katalysator (11) gefüllt ist, zwischen einem Außenrohr und dem Innenrohr (3) des Reformierrohrs (1) vorgesehen ist, der Verdampfungsabschnitt (2) unter dem Reaktionsabschnitt (31) vorgesehen ist und eine Schicht eines Packungsmaterials (12) an einem oberen Teil in dem Verdampfungsabschnitt (2) vorgesehen ist.

5. Reformiervorrichtung nach einem der Ansprüche 1 bis 4, bei welchem das Rohmaterial ein Alkohol ist.

6. Reformiervorrichtung nach Anspruch 5, bei welchem der Reformierkatalysator (11) eine Mischung eines KupferZink-Systems ist, das auf einem Aluminiumoxydträger getragen wird.

7. Reformiervorrichtung nach einem der Ansprüche 4 bis 6, bei welchem das in dem oberen Teil des Verdampfungsabschnitts (2) gepackte Material (12) Aluminiumoxydkugeln oder Keramikkugeln sind.

8. Reformiervorrichtung nach einem der Ansprüche 1 bis 7, bei welchem die Reformierrohre (1) in einem Mantel (4) angeordnet sind, ein Raum zwischen dem Mantel (4) und den Reformierrohren (1) mit einem WärmeübertragungsPackungsmaterial (13) gefüllt ist und der Heizabschnitt (33) unter den Reformierrohren (1) in dem Mantel (4) angeordnet ist, wobei in dem Heizabschnitt (33) Brennstoff verbrannt wird, um ein Verbrennungsgas zu erzeugen, wodurch die Verdampfungsabschnitte (2) an den unteren Teilen der Reformierrohre (1) und die Reaktionsabschnitte (31) an den oberen Teilen der Reformierrohre (1) von außerhalb der Reformierrohre (1) durch das Verbrennungsgas erwärmt werden.

9. Reformiervorrichtung nach Anspruch 8, bei welcher der Heizabschnitt (33) eine Verbrennungskatalysatorschicht (14) aufweist, die Brennstoff und Luft infolge katalytischer Verbrennung verbrennt.

## FIG. 1

# FIG. 2

REACTION PORTION

VAPORIZATION PORTION

HEATING SOURCE

1

2

14

a

b

A

100    200    300    400    1400

TEMPERATURE  (°C)